(19) Europäisches Patentamt

**European Patent Office**

Office européen des brevets

(11) Numéro de publication: **0 237 377**
**B1**

(12) **FASCICULE DE BREVET EUROPEEN**

(45) Date de publication du fascicule du brevet:
**24.10.90**

(21) Numéro de dépôt: **87400257.9**

(22) Date de dépôt: **04.02.87**

(51) Int. Cl.⁵: **F16J 9/20**

(54) **Segment racleur perfectionné et ensemble à pistons coulissant dans des cylindres, tel que moteur à combustion interne, comportant de tels segments.**

(30) Priorité: **14.02.86 FR 8602033**

(43) Date de publication de la demande:
**16.09.87 Bulletin 87/38**

(45) Mention de la délivrance du brevet:
**24.10.90 Bulletin 90/43**

(84) Etats contractants désignés:
**AT BE CH DE ES FR GB GR IT LI LU NL SE**

(56) Documents cités:
**GB-A- 122 130**
**GB-A- 593 392**

(73) Titulaire: **Geffroy, Robert, 1, Boulevard Richard Wallace, F-92201 Neuilly sur Seine(FR)**
Titulaire: **Geffroy, Christophe, 1, Boulevard Richard Wallace, F-92201 Neuilly sur Seine(FR)**

(72) Inventeur: **Geffroy, Robert, 1, Boulevard Richard Wallace, F-92201 Neuilly sur Seine(FR)**
Inventeur: **Geffroy, Christophe, 1, Boulevard Richard Wallace, F-92201 Neuilly sur Seine(FR)**

(74) Mandataire: **Rinuy, Santarelli, 14, avenue de la Grande Armée, F-75017 Paris(FR)**

## Description

La présente demande a trait au domaine de la segmentation d'un piston coulissant dans un cylindre dans un ensemble tel qu'un moteur à combustion interne, un compresseur ou une pompe à pistons.

On sait qu'en général un des segments a plus particulièrement pour mission de collecter le lubrifiant déposé sur la paroi du cylindre et de le renvoyer dans le carter. Ce segment est en général connu sous le nom de "segment racleur".

L'invention concerne plus particulièrement un segment racleur comportant un anneau de maintien, et une jupe de raclage comportant au moins une portion sensiblement tronconique ouverte vers le carter et présentant à l'une de ses extrémités une ligne de raclage venant en contact avec la paroi du cylindre. L'anneau de maintien sert au montage de ce segment dans une gorge "de maintien" du piston.

Un tel segment racleur est décrit notamment dans la demande de brevet européen des Demandeurs EP-A 58 120. Ce document décrit en effet plusieurs modes de réalisation d'un segment racleur constitué d'un anneau plat de maintien sur le bord extérieur duquel est raccordée une jupe de raclage tronconique dont l'extrémité libre présente une ligne de raclage venant en contact avec la paroi du cylindre.

Les Demandeurs ont procédé à de nombreux essais de ce type de segment et, à l'usage, ont eu à résoudre plusieurs problèmes techniques d'ordre général devenant prépondérant dans certaines situations : en fonctionnement l'anneau de maintien du segment était soumis à des forces de frottement radiales. La liberté de mouvement radial de l'anneau de maintien dans sa gorge en est en effet une condition essentielle pour le bon fonctionnement du segment racleur : le piston, en cours de fonctionnement, est animé de légers mouvements radiaux dans la limite de son jeu dans le cylindre qui doivent être compensés par coulissement de l'anneau de maintien dans la gorge du piston, pour éviter que le segment ne perde contact avec le cylindre sur une portion de son pourtour, et que les zones correspondantes sur le cylindre ne soient pas raclées.

Poursuivant leurs recherches, les Demandeurs ont pu mettre en évidence le fait que la distance axiale existant entre la ligne de raclage et le plan moyen de maintien du segment avait pour effet de provoquer un couple de basculement de l'anneau de maintien qui s'arc-boute alors dans la gorge de maintien, ce qui occasionne les frottements radiaux mentionnés ci-dessus, perturbant de ce fait le fonctionnement du segment racleur. Il y a là un problème technique d'ordre particulier que les demandeurs ont cherché à résoudre.

Ce problème technique concerne en fait tous les segments racleurs comprenant un anneau de maintien comportant une portion sensiblement plate reliée à la jupe et une ligne de raclage située nettement hors du plan moyen de cette portion.

C'est ainsi que le même problème technique se pose si on considère le segment divulgué dans le document GB-A 593 393. En effet, ce document décrit et montre non seulement des segments présentant une structure semblable à celle décrite ci-dessus (anneau plat de maintien et jupe de raclage, cf. par exemple figure 11), mais également des segments dont l'anneau de maintien comporte une portion plate reliée d'une part, à la jupe et, d'autre part, à une portion d'appui élastique (cf. figures 4 et 8). Ce document montre également une jupe de raclage constituée par des secteurs rigides non jointifs et présentant de ce fait un important défaut d'étanchéité.

Il est à observer d'une part, que les divers segments sont d'emblée calés radialement (c'est la raison d'être de la portion d'appui des segments illustrés dans les figures 4 et 8). Il s'ensuit, déjà à ce niveau, d'importantes forces de frottement radiales. De plus, d'autre part, le raccord de la jupe de raclage à la portion plate de l'anneau de maintien se fait de façon telle que la ligne de raclage de la jupe est décalée axialement par rapport au plan moyen de la portion plate de l'anneau raccordée à la jupe, il s'ensuit la création d'un couple de basculement augmentant lesdites forces radiales de frottement.

L'élimination du couple du basculement a fait l'objet d'études et d'expérimentations de la part des demandeurs qui ont abouti au segment racleur faisant l'objet de la présente demande.

Selon l'invention, ce dernier est caractérisé en ce que la jupe de raclage est conformée en sorte que la ligne de raclage est sensiblement dans le plan moyen de la portion plate de l'anneau de maintien reliée à la jupe.

Cette caractéristique générale présente l'avantage de réduire ou même de supprimer le couple de basculement dont il a été fait mention, ce qui permet à l'anneau de maintien de coulisser dans sa gorge pratiquement librement, ce qui est le but recherché.

Selon une autre caractéristique de l'invention, la jupe comporte, en plus de la portion tronconique, une portion de liaison reliant l'anneau de maintien à la portion tronconique; et, selon un mode de réalisation préféré, l'ensemble formé par la portion tronconique et la portion de liaison présente une forme d'arche.

Avantageusement, les caractéristiques précédentes se combinent à certaines au moins des caractéristiques des segments racleurs décrits dans les documents précités, ce qui permet, non seulement d'en combiner les avantages, mais en plus d'obtenir un segment racleur particulièrement performant.

Ainsi, selon un mode de réalisation préféré particulièrement avantageux de l'invention et d'une manière connue par les documents précités, la portion tronconique présente des lamelles s'articulant à l'extrémité opposée à la ligne de raclage, et jointives en sorte que ladite portion est étanche entre le haut et le bas du piston. De même la jupe du segment, selon le mode de réalisation préféré de la présente invention est réalisé en métal élastique très mince, par exemple entre 0,12 et 0,20 millimètrès et l'angle que forme ladite portion tronconique de raclage avec la paroi du cylindre est très faible, 7° environ.

Il en résulte un segment qui non seulement présente une très grande efficacité quant au raclage et au recyclage de l'huile - raclage à simple effet pendant les courses descendantes du piston, recyclage par effet dynamique (effet Kingsbury) vers

le carter de l'huile pendant les courses montantes du piston - mais en plus est exempt, en fonctionnement, de forces de frottement s'opposant à d'éventuels déplacements radiaux.

Les demandeurs ont encore pu s'apercevoir, du fait même de la faible épaisseur du métal utilisé, qu'il se posait un problème dû à l'absence de tenue de ces segments lorsqu'ils sont hors du piston. Cette absence de tenue les exposent en effet à des déformations au cours des manipulations de magasinage, d'expédition ou de montage.

Selon un autre aspect de la présente invention, ce problème est résolu, d'une manière générale, en prévoyant un anneau de maintien d'épaisseur substantielle.

Dans le mode de réalisation préféré, l'anneau de maintien comporte deux parties distinctes : une première constituée par un anneau dit "de montage" issu de la même feuille métallique que la jupe et, par conséquent, rattaché à cette dernière, et une seconde constitué par un anneau de renforcement fixé sur l'anneau de montage.

Ces caractéristiques présentent l'avantage de conférer au segment racleur une tenue qui réduit ou supprime les risques précités de déformations, et offre en outre l'avantage de pouvoir remplacer la cale d'épaisseur qui était nécessaire au montage de certains segments, décrits dans les documents mentionnés plus haut, dans leur gorge de maintien, une gorge de trop faible largeur ne pouvant facilement être usinée en série.

Les demandeurs ont également constaté, que la rigidité circonférentielle de l'anneau de maintien de très faible épaisseur provoquait des difficultés d'ouverture pour le monter dans la gorge du piston. Ce problème est résolu par la présente invention en proposant un segment comportant au moins deux coupes régulièrement réparties sur la circonférence.

Dans le mode préféré de réalisation, les coupes sont exécutées dans un plan radial du segment et sont au nombre de deux, ce qui fait qu'au montage on dispose d'au moins deux secteurs de segment qui sont aisés à mettre en place séparément. Cette caractéristique intéressante présente en outre l'avantage d'allier une diminution des risques de déformation à une plus grande facilité de montage.

Enfin, au cours des essais du segment de l'art antérieur précité, les inventeurs ont pu constater, dans certaines conditions, l'insuffisance de l'effet de charnière attendu de la pliure de raccordement des lamelles avec son anneau de maintien. Par cette insuffisance les lamelles risquent, en position de fonctionnement, de se bomber et de créer entre elles un jeu supérieur à leurs jeux micrométriques de construction, ce qui nuit à l'étanchéité de la jupe.

La présente invention résoud ce problème par une diminution d'épaisseur du métal élastique très mince du segment, à l'endroit de la pliure qui sert de charnière à chaque lamelle, éventuellement combinée avec une atténuation de la très grande minceur du métal du segment.

La présente invention concerne également un ensemble tel qu'un moteur ou une pompe, comportant au moins un piston coulissant dans un cylindre, le piston étant muni d'un segment tel que succinctement exposé ci-dessus.

On notera en effet que, par exemple, l'emploi de segments conformes à l'invention dans des moteurs à combustion interne, permet d'améliorer les performances de ces derniers, grâce à une baisse importante des frottements.

Il est à noter, au titre des performances du segment racleur selon l'invention, qu'il permet l'emploi de segments de compression étanches, tels que ceux de la demande de brevet européen sus-citée des demandeurs No. 82 400 204.2 (EP-A 58 120), en maîtrisant, par sa haute efficacité, les pompages d'huile adverses de segments de compression étanches.

D'autres caractéristiques et avantages de l'invention apparaîtront d'ailleurs au cours de la description détaillée d'un mode de réalisation de l'invention, qui est faite en regard des dessins annexés sur lesquels:

– la figure 1 représente en perspective un mode de réalisation préféré d'un segment selon l'invention coupe en deux demi-segments,

– la figure 2 est une vue en coupe radiale d'un segment selon ce même mode de réalisation, monté en position de fonctionnement sur un piston coulissant dans un cylindre,

– la figure 3 représente une coupe partielle très agrandie d'un exemple d'exécution de la pliure sur laquelle s'articulent les lamelles d'un segment racleur selon l'invention.

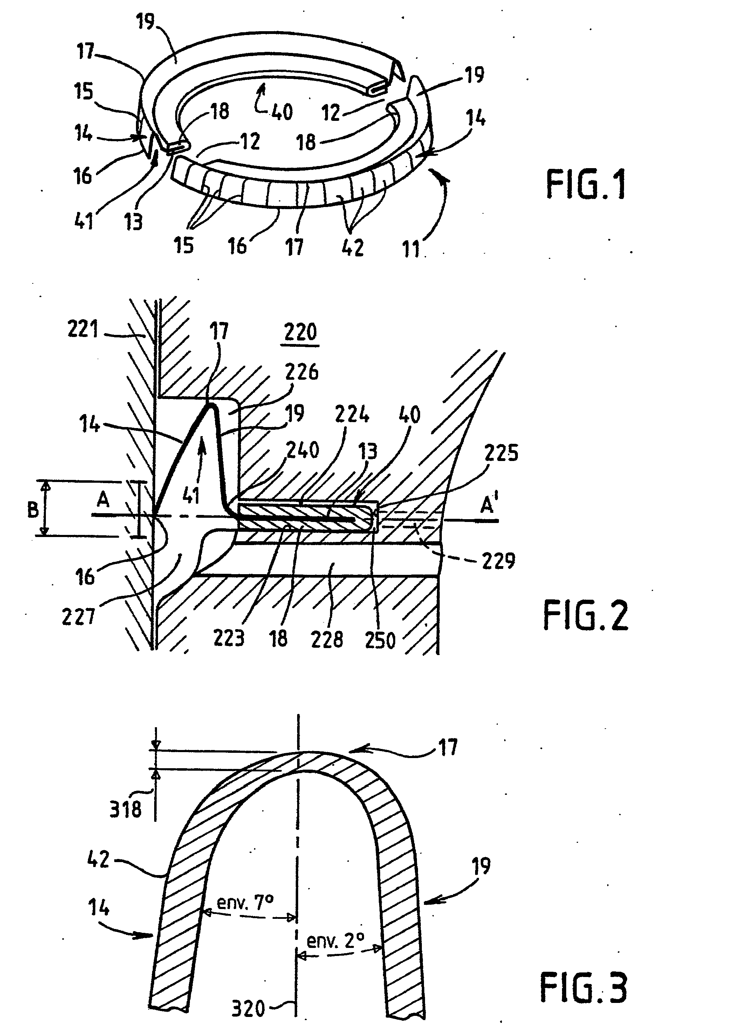

La figure 1 illustre un mode de réalisation préféré du segment racleur 11 faisant l'objet de l'invention, destiné à être monté dans un piston 220 coulissant dans un cylindre 221 que l'on aperçoit plus particulièrement sur la figure 2. Le piston 220 comporte une gorge périphérique 223 de maintien du segment. Celui-ci comporte un anneau de maintien 40 comprenant une simple portion plate reliée à une jupe de raclage 41 comportant une portion sensiblement tronconique 14 présentant à l'une de ses extrémités une ligne de raclage 16 venant en contact avec la paroi du cylindre 221.

Dans la forme de réalisation représentée, l'anneau de maintien 40 comporte deux parties 13, 18 qui seront décrites plus loin.

D'une manière générale, selon un aspect de l'invention, la ligne de raclage 16 est disposée sensiblement dans le plan moyen de l'anneau de maintien, ce plan moyen étant illustré en figure 2 par les traits d'axe A-A'.

Au sens de l'invention, il convient d'interpréter l'expression "ligne de raclage disposée sensiblement dans le plan moyen" comme signifiant que la ligne de raclage est disposée à l'intérieur d'une plage axiale, s'étendant de part et d'autre du plan moyen de la portion plate de l'anneau de maintien, plage dont la hauteur est petite devant le diamètre du segment. Ainsi en figure 2, une telle plage a été illustrée et référencée en B. Cette plage présente une taille de quelques millimètres pour un diamètre de segment d'environ quatre vingts millimètres.

Selon une autre caractéristique de l'invention la jupe comporte, en plus de la portion tronconique 14, une pliure 17 et une portion de liaison 19 reliant l'anneau de maintien 40, à la portion tronconique, cette caractéristique offre l'avantage de permettre à la portion tronconique de se présenter sur la paroi du cylindre dans des conditions absolument semblables à celles décrites dans les documents précités.

Selon un mode de réalisation préférentiel de l'invention, la jupe de raclage 41, c'est-à-dire l'ensemble formé par la portion tronconique 14, la pliure 17 et la portion de liaison 19 présente une forme d'arche. Outre l'avantage qui résulte du fait que cette disposition est très facile à mettre en forme, il faut aussi noter qu'elle procure une certaine élasticité radiale à la jupe, qui contribue à l'amélioration du fonctionnement du segment racleur.

La gorge de maintien du segment est complétée par un logement circulaire 226 pour recevoir, avec ou sans contact avec le piston, la jupe 41 du segment et un évidement circulaire 227 pour l'accueil de l'huile raclée et son retour au carter via le centre creux du piston par des trous radiaux 228 disposés autour du piston. En variante, comme en complément, d'autres trous radiaux, référencés en 229, peuvent également être prévus entre le fond de gorge 225 et le centre creux du piston.

Dans ce mode de réalisation préféré de l'invention la portion tronconique 14 présente des lamelles 42, en métal élastique très mince s'articulant sur la pliure 17, et jointives en sorte que ladite portion 14 soit étanche entre le haut et le bas du piston. En effet, et ainsi qu'il l'est exposé dans les brevets des demandeurs précités, le jeu résultant des coupes 15 entre les lamelles est de l'ordre, par exemple, de quelques micromètres quand le segment est en place dans le cylindre, pour un diamètre de celui-ci d'environ 80 mm. Un jeu de cet ordre de grandeur entre deux surfaces peut être considéré comme parfaitement étanche au passage d'un lubrifiant tel que l'huile utilisé généralement dans les moteurs ou, plus généralement, dans les ensembles à pistons coulissant dans des cylindres. Les lamelles 42 sont mobiles autour de la ligne de pliure 17 qui est en quelque sorte la "charnière" des lamelles. Cet effet de charnière provient ainsi qu'il est décrit dans les documents précités de la petite largeur de ces lamelles et de la faible épaisseur du métal qui les constitue. En effet, et selon le mode de réalisation particulièrement avantageux de ce segment racleur illustré aux figures, la jupe est constituée d'un acier très mince - entre 0,12 et 0,20 millimètres d'épaisseur - et élastique.

La figure 3 représente une vue en coupe très agrandie du sommet de la jupe 41 sur laquelle on voit une lamelle 42, la portion de liaison 19 et la pliure circulaire 17. Cette pliure circulaire comprend un amincissement 318 du métal des portions 14 et 19 de la jupe 41. Cet amincissement est obtenu par tout moyen connu, par exemple, d'enlèvement de métal, d'étirage, d'écrasement produit lors du formage à la presse de la portion 19, de la pliure 17 et des lamelles 42.

On observe que la portion de liaison 19 est quasiment cylindrique. En effet l'angle que forme, en coupe axiale, figure 3, la portion 19 avec un axe d'orientation axiale 320 passant sur cette figure approximativement par le milieu de la pliure 17, est ici d'environ 2°, angle nécessaire au dégagement du poinçon de l'outil d'emboutissage.

Avantageusement l'angle que forme la portion 14 avec l'axe 320 est de 7°. On sait, notamment par l'art antérieur précité, qu'un tel angle est favorable à l'effet Kingsburry.

On notera que l'amincissement 318 du segment, localise sur la ligne de pliage 17 le point d'articulation des lamelles 42, en accroissant la flexibilité de celles-ci. Ainsi, la part de flexibilité des lamelles 42 due à leur très grande minceur, peut être réduite dans la mesure de l'accroissement de flexibilité de la pliure 17, ce qui permet d'atténuer sensiblement la très grande minceur du métal élastique de la jupe du segment 11 qui reste néanmoins un métal très mince.

Ainsi pour un segment de 80 mm de diamètre qui serait fabriqué par exemple en acier de 0,20 mm d'épaisseur, un amincissement de la pliure, qui serait réduite par exemple à 0,13 mm, permet de porter l'épaisseur de l'ensemble du segment à 0,25 ou 0,30 mm, laquelle épaisseur reste toutefois une épaisseur très mince.

On conserve ainsi, cependant, la même force d'appui très faible des lamelles 42 contre le cylindre. Enfin, l'amincissement 318 et l'atténuation de la très grande minceur des lamelles réduisent les risques de déformation des lamelles par bombage vers l'extérieur, lequel bombage, en accroissant le jeu entre lamelles, qui est normalement micrométrique par construction, serait nuisible à l'étanchéité du segment.

Selon une autre caractéristique de l'invention, l'anneau de maintien 40 présente une épaisseur substantielle, par exemple de 5 à 10 fois plus grande que celle des lamelles. Une telle caractéristique permet de rigidifier le segment, ce qui est particulièrement avantageux lorsque ce dernier est hors du piston, en pièce détachée, et lors de son montage dans le piston.

Le mode de réalisation représenté illustre une réalisaton possible, et préférée, de cet aspect de l'invention.

L'anneau de maintien 40 comporte deux parties 13, 18. Une première est constituée par un anneau 13 dit de "montage", issu de la même feuille métallique que la jupe, et rattaché par une pliure 240 à la portion de liaison 19 de la jupe.

La seconde partie est constituée par un anneau indépendant 18, dit "de renforcement", d'épaisseur substantielle, ici quelques dixièmes de millimètres. L'anneau de renforcement 18 présente ici une section en U, enserrant l'anneau de montage. Dans le mode de réalisation représenté, il est serti sur l'anneau de montage 13.

D'autres réalisations de cet aspect de l'invention sont possibles.

Il convient d'avoir à l'esprit que, dans certaines applications au moins, l'anneau de maintien 40 doit présenter une épaisseur substantielle, ce qui, entre autres avantages, rigidifie le segment.

De même cet anneau de maintien d'épaisseur substantielle peut remplacer la cale qui pourrait s'avérer nécessaire au montage de l'anneau de montage 13 du segment en métal très mince dans la gorge du piston destinée à le recevoir, si l'anneau de maintien 40 n'était constitué que de cet anneau de montage 13. Les dimensions de l'anneau de maintien d'épaisseur substantielle sont calculées de façon à ce qu'il subsiste un jeu axial 224 et radial 225 entre la gorge 223 et l'anneau de maintien 40 d'épaisseur substantielle, jeux nécessaires au bon fonctionnement du segment, pour permettre, notamment, des déplacements radiaux de ce dernier par rapport au piston.

En effet, le piston comprend une gorge circulaire de maintien du segment 223 comportant un jeu axial 224 et un jeu radial 250 suffisants l'un et l'autre pour assurer l'indépendance radiale du segment et du piston, au mois jusqu'à la limite de son jeu dans le cylindre, tout en étant assez faible pour réduire au minimun les passages d'huile autour du segment ; en fait, cela correspond à un jeu axial 224 de l'ordre de 0,03 mm et un jeu radial 250 de l'ordre de 0,15 mm pour un piston de 80 mm de diamètre.

On observera donc que le fait de disposer la ligne de raclage 16 dans le plan moyen (A-A' sur la figure 2) de l'anneau de maintien 40 permet d'éviter, notamment au cours du raclage, alors que le piston descend, le couple de basculement que l'on constate lorsque la ligne de raclage est nettement distance de ce plan moyen. Il en résulte que les mouvements radiaux de l'anneau de maintien 40 à l'intérieur de la gorge 223 du piston, dans la limite du jeu radial 225, nécessaires pour compenser les légers mouvements radiaux de ce dernier, peuvent se faire sans contrainte.

Le montage du segment est également facilité par une autre caractéristique avantageuse, selon laquelle le segment présente au moins deux coupes 12 régulièrement réparties sur la circonférence et orientées chacune dans un plan radial contenant l'axe du segment. On montre ces parties de segments séparément dans la gorge 223 du piston 220.

Selon l'invention, la jupe peut en variante avoir une forme très différente de celle d'une arche, à condition, toutefois, de disposer la ligne de raclage dans le plan moyen de la portion plate de l'anneau de maintien.

## Revendications

1. Segment racleur, pour piston coulissant dans un cylindre, du genre comportant un anneau de maintien (40) et une jupe de raclage (41) comportant au moins une portion sensiblement tronconique (14) et présentant à l'une de ses extrémités une ligne de raclage (16) venant en contact avec la paroi du cylindre caractérisé en ce que la jupe (41) est conformée en sorte que la ligne de raclage (16) est disposée sensiblement dans le plan moyen de la portion plate de l'anneau de maintien (40) reliée à la jupe (41).

2. Segment racleur selon la revendication 1, caractériseé en ce que la jupe de raclage étanche est composée de lamelles élastique jointives.

3. Segment selon l'une quelconque des revendications 1, 2, caractérisé en ce que la jupe (41) comporte, en plus de la portion tronconique (14), une portion de liaison (19) reliant l'anneau de maintien (40) à la portion tronconique (14).

4. Segment selon la revendication 3 caractérisé en ce que l'ensemble formé par la portion tronconique (14) et la portion de liaison (19) présente une forme d'arche.

5. Segment selon l'une quelconque des revendications 1 à 4 caractérisé en ce que, la portion tronconique (14) présente des lamelles (42) s'articulant autour d'une pliure (17) opposée à la ligne de raclage, et jointives en sorte que ladite portion soit étanche de l'intérieur vers l'extérieur de la jupe (41).

6. Segment selon l'une quelconque des revendicatons 1 à 5 caractérisé en ce que ladite portion tronconique (14), au moins, est réalisée en métal élastique très mince.

7. Segment selon l'une quelconque des revendicatons 1 à 6, caractérisé en ce que l'anneau de maintien (40) présente une épaisseur substantielle, de l'ordre 5 à 10 fois plus grande que celle des lamelles.

8. Segment selon la revendication 7, caractérisé en ce que l'anneau de maintien (40) comporte deux parties (13, 18): une première étant constituée par un anneau (13) dit "de montage" rattaché à la jupe (41) et une seconde constituée par un anneau indépendant (18) de renforcement fixé sur ledit anneau de montage.

9. Segment selon l'une quelconque des revendications 1 à 8, caractérisé en ce qu'il présente au moins deux coupes (12) ménagées selon un plan radial du segment et régulièrement réparties sur la circonférence du segment (11).

10. Segment selon l'une quelconque des revendications 5 à 9, caractérisé en ce que la pliure (17) comporte un amincissement (318) de l'épaisseur du métal constituant le segment.

11. Segment selon la revendication 10, caractérisé en ce que la rigidité des lamelles (14) est augmentée par une atténuation de la très grande minceur du segment (11) en rapport avec l'accroissement de la flexibilité des lamelles (14) obtenue par l'amincissement (318) du pliage (17).

12. Ensemble comportant au moins un piston coulissant dans un cylindre, caractérisé en ce que le piston est muni d'un segment racleur conforme à l'une quelconque des revendications 1 à 11.

13. Moteur à combustion interne du type à pistons coulissant dans des cylindres, caractérisé en ce qu'au moins un piston est muni d'au moins un segment racleur conforme à l'une quelconque des revendications 1 à 11.

## Claims

1. A scraper ring for a piston which slides in a cylinder of the kind comprising a holding collar (40) comprising at least one substantially flat portion connected to a scraping skirt (41) which comprises at least one substantially tapered portion (14) and presents at one of its ends a scraping line (16) which comes into contact with the cylinder wall, characterized in that the skirt (41) is shaped such that the scraping line (16) is disposed substantially in the median plane of the flat portion of the holding collar (40) connected to the skirt (41).

2. A scraper ring according to Claim 1, characterized in that the impermeable scraping skirt is composed of abutting thin elastic strips.

3. A ring according to any one of Claims 1 and 2, characterized in that the skirt (41), comprises in addition to the tapered portion (14), a connecting portion (19) which joins the holding collar (40) to the tapered portion (14).

4. A ring according to Claim 3, characterized in that the assembly formed by the tapered portion (14) and the connecting portion (19) is arch-shaped.

5. A ring according to any one of Claims 1 to 4, characterized in that the tapered portion (14) comprises thin strips (42) which pivot about a fold (17) at the opposite end to the scraping line and abut in such a way that the said portion is impermeable from the inside to the outside of the skirt (41).

6. A ring according to any one of Claims 1 to 5, characterized in that at least the said tapered portion (14) is made of very thin elastic metal.

7. A ring according to any one of Claims 1 to 6, characterized in that the holding collar (40) has a substantial thickness, of the order of 5 to 10 times greater than that of the thin strips.

8. A ring according to Claim 7, characterized in that the holding collar (40) comprises two parts (13, 18): a first part consisting of a ring (13) called a "mounting" ring fastened to the skirt (41), and a second part consisting of a separate reinforcing ring (18) fixed on the said mounting ring.

9. A ring according to any one of Claims 1 to 8, characterized in that it comprises at least two cuts (12) made in a radial plane of the ring and regularly spaced on the circumference of the ring (11).

10. A ring according to any one of Claims 5 to 9, characterized in that the fold (17) comprises a thinner region (318) in the thickness of the metal forming the ring.

11. A ring according to Claim 10, characterized in that the rigidity of the thin strips (42) is increased by an increase in thickness of the very thin ring (11) related to the increase in flexibility of the thin strips (42) obtained by means of the thinner region (318) of the fold (17).

12. An assembly comprising at least one piston which slides in a cylinder, characterized in that the piston is equipped with a scraper ring as described in any one of Claims 1 to 11.

13. An internal combustion engine of the type comprising pistons which slide in cylinders, characterized in that at least one piston is equipped with at least one scraper ring as described in any one of Claims 1 to 11.

**Patentansprüche**

1. Ölabstreifring für einen in einem Zylinder gleitenden Kolben, mit einem Haltering (40), der zumindest einen im wesentlichen flachen Abschnitt aufweist, welcher mit einer Abstreifschürze (41) verbunden ist, die mindestens einen im wesentlichen kegelstumpfförmigen Abschnitt (14) aufweist und an einem ihrer Enden mit einer Abstreifkante (16) versehen ist, die mit der Zylinderwand in Kontakt gelangt, dadurch gekennzeichnet, dass die Schürze (41) so geformt ist, dass die Abstreifkante (16) im wesentlichen in der Mittelebene des flachen Abschnitts des mit der Schürze (41) verbundenen Halterings (40) liegt.

2. Ölabstreifring nach Anspruch 1, dadurch gekennzeichnet, dass die dichte Abstreifschürze aus elastischen, nebeneinanderliegenden Lamellen besteht.

3. Ölabstreifring nach einem der Ansprüche 1 und 2, dadurch gekennzeichnet, dass die Schürze (41) neben dem kegelstumpfförmigen Abschnitt (14) noch einen Verbindungsabschnitt (19) zur Verbindung des Halterings (40) mit dem kegelstumpfförmigen Abschnitt (14) aufweist.

4. Ölabstreifring nach Anspruch 3, dadurch gekennzeichnet, dass das gesamte, vom kegelstumpfförmigen Abschnitt (14) und vom Verbindungsabschnitt (19) gebildete Teil eine gewölbte Form aufweist.

5. Ölabstreifring nach einem der Ansprüche 1 bis 4, dadurch gekennzeichnet, dass der kegelstumpfförmige Abschnitt (14) Lamellen (42) aufweist, die sich um eine der Abstreifkante gegenüberliegende Abkantung (17) verschwenken können und so nebeneinander liegen, dass besagter Abschnitt von der Innenseite zur Aussenseite der Schürze (41) abdichtet.

6. Ölabstreifring nach einem der Ansprüche 1 bis 5, dadurch gekennzeichnet, dass zumindest der kegelstumpfförmige Abschnitt (14) aus sehr dünnem elastischen Metall besteht.

7. Ölstreifring nach einem der Ansprüche 1 bis 6, dadurch gekennzeichnet, dass der Haltering (40) eine merkliche Dicke in einer Grössenordnung von 5 bis 10-fach grösser als die der Lamellen aufweist.

8. Ölabstreifring nach Anspruch 7, dadurch gekennzeichnet, dass der Haltering (40) zwei Abschnitte (13, 18) aufweist, nämlich einen ersten, der von einem an der Schürze (41) befestigten, sogenannten "Montagering" (13) gebildet wird, und einen zweiten, der aus einem unabhängigen, am Montagering befestigten Verstärkungsring (18) besteht.

9. Ölabstreifring nach einem der Ansprüche 1 bis 8, dadurch gekennzeichnet, dass mindestens zwei in einer Radialebene des Ölabstreifringes (11) angebrachte und gleichmässig auf dessen Umfang verteilte Ausschnitte (12) vorgesehen sind.

10. Ölabstreifring nach einem der Ansprüche 5 bis 9, dadurch gekennzeichnet, dass die Abkantung (17) eine Verkleinerung (318) der Dicke des den Ölabstreifring ausbildenden Metalles aufweist.

11. Ölabstreifring nach Anspruch 10, dadurch gekennzeichnet, dass in Zusammenhang mit der durch die Verkleinerung (318) der Dicke an der Abkantung (17) erzielten Erhöhung der Flexibilität der Lamellen (14) die Steifigkeit der Lamellen (14) durch eine weniger dünne Ausbildung des sehr dünnen Ölabstreifringes (11) verbessert wird.

12. Baueinheit mit wenigstens einem in einem Zylinder gleitenden Kolben, dadurch gekennzeichnet, dass der Kolben mit einem Ölabstreifring nach einem der Ansprüche 1 bis 11 versehen ist.

13. Verbrennungsmotor mit in Zylindern gleitenden Kolben, dadurch gekennzeichnet, dass wenigstens ein Kolben mit mindenstens einem Ölabstreifring nach einem der Ansprüche 1 bis 11 versehen ist.

EP 0 237 377 B1

FIG.1

FIG.2

FIG.3

env. 7°

env. 2°